# EUROPEAN PATENT APPLICATION

(11) **EP 1 070 753 A2**
(43) Date of publication of application: **24.01.2001**
(21) Application number: 00116225.4
(22) Date of filing: 17.03.1995
(51) Int. Cl.: C09K 19/30, C09K 19/34, C09K 19/32

(54) **Liquid crystal compounds and their use in active matrix type liquid crystal display devices**

(30) Priority: 17.03.1994 JP 4680794; 17.03.1994 JP 4680894
(62) Divisional of application: 95103987.4
(71) Applicant: Hitachi, Ltd., Chiyoda-ku, Tokyo 101 (JP)
(72) Inventor: Ohe, Masahito, Hitachi-shi, Ibaraki 312 (JP); Kondo, Katsumi, Ibaraki 312 (JP); Ota, Masuyuki, Hitachinaka-shi, Ibaraki 312 (JP)
(74) Representative: Beetz & Partner Patentanwälte

(57) **Abstract**

The invention relates to novel liquid crystal compounds of the general formulae I and II, 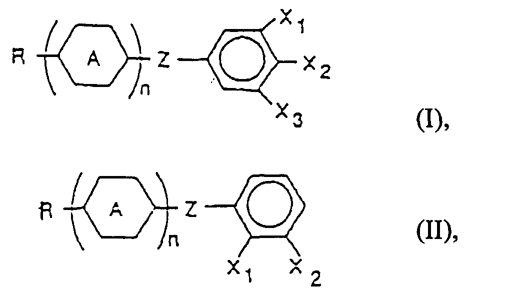 wherein are:
- X₁, X₂ and X₃: fluoro, cyano, trifluoromethyl, trifluoromethoxy, nitro or a hydrogen atom,
- R: C₁₋₁₀-alkyl or C₁₋₁₀-alkoxy, which may be substituted,
- A: a cyclohexane ring, a benzene ring, a dioxane ring, a pyrimidine ring or a bicyclo[2.2.2]-octane or -hexane ring,
- Z: a single bond, an ester bond, an ether bond, methylene or ethylene,
and
- n: 1 or 2.

The invention further relates to active matrix type liquid crystal display devices, particularly of the horizontal electric field type, comprising these liquid crystal compounds.

## Description

The present invention relates to novel liquid crystal compounds and liquid crystal display devices comprising these liquid crystal compounds, preferably devices of the active matrix type, and more preferably of the horizontal electric field type, in which an electric field is applied mainly parallel to the substrates and in which the broad visual field and the large numerical aperture are compatible.

In conventional liquid crystal display devices, the electrodes for driving the liquid crystal layer are formed on the surface of two substrates, and transparent electrodes are used, the electrodes facing each other. This is because what is used is a display method called the twisted nematic display method (TN method) in which the liquid crystal layer is driven by applying an electric field in the vertical direction to the surface of the substrate. On the other hand, regarding the display method in which an electric field is applied in a direction almost parallel to the surface of the substrate, a display method using comb-type electrodes is disclosed in JP-63-21907 (1988) and US 4 345 249. In this case, the electrodes are not necessarily selected to be transparent, but non-transparent and metallic electrodes with higher electric conductivity are used. However, in the above prior art, as for the display method in which the electric field is applied in the direction parallel to the surface of the electrode, (which is designated "horizontal electric field method"), specifically used in the active matrix driving mode, the material properties required to realize a high numerical aperture are not described in detail.

In the conventional active matrix type liquid crystal display devices, typically according to the twisted nematic method, transparent electrodes are used. It is, therefore, possible to make the numerical aperture relatively wider, which is the area that the light per unit pixel passes through. However, in the horizontal electric field system, an opaque metal electrode is used. It is, therefore, impossible to realize a large numerical aperture. There is an essential problem in that the portion of the opaque electrode cannot be used as an area the light passes through. The brightness of the display device depends upon the magnitude of the numerical aperture. Even if the intensity of background light is increased, the problem arises that the power consumption is increased extremely.

Accordingly, in order to realize a large numerical aperture in the horizontal electric field method, it is required to enlarge the gap between the electrodes. However, a new problem arises due to the enlargement of the gap. First, a disturbance of orientation occurs by the static electricity, because the volume of the liquid crystal decreases further. Generally, the electrodes in the horizontal electric field method are different in their configuration from those in the prior art. Therefore, the corresponding volume of the liquid crystal is not so large. If the volume becomes smaller by enlarging the gap between the electrodes, the liquid crystal is susceptible to be affected by the effect of static electricity. As a result, the disturbance of orientation due to static electricity increases. Secondly, if the gap between the electrodes becomes large, the problem arises in the horizontal electric field display method that a large drive voltage is required.

It is the underlying problem of the present invention to provide novel liquid crystal compounds and compositions and their use in liquid crystal display devices, and active matrix type liquid crystal display devices using the horizontal electric field method, in which a broad visual field and a large numerical aperture are realized.

The above problem is solved according to the independent claims. The dependent claims relate to preferred embodiments.

In accordance with a first solution, the present invention provides liquid crystal compounds of the general formula I, 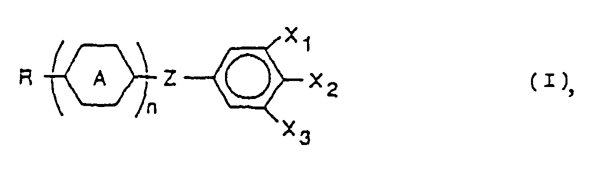 wherein are:
- X₁, X₂ and X₃: fluoro, cyano, trifluoromethyl, trifluoromethoxy, nitro or a hydrogen atom,
- R: C₁₋₁₀-alkyl or C₁₋₁₀-alkoxy, which may be substituted,
- A: a cyclohexane ring, a benzene ring, a dioxane ring, a pyrimidine ring or a bicyclo[2.2.2]-octane or -hexane ring,
- Z: a single bond, an ester bond, an ether bond, methylene or ethylene, and
- n: 1 or 2.

The liquid crystal compounds of formula I are preferably selected from 1,2-dicyano-4-[trans-4-(trans-4-propylcyclohexyl)-cyclohexyl]-benzene; trans-4-propyl-(3,4-dicyanobiphenyl-4'-yl)-cyclohexane; 2-(trans-4-propylcyclohexyl)-1-[trans-4-(3,4-dicyanophenyl)-cyclohexyl]-ethane; 3,4-dicyanophenyl-trans-4-pentylcyclohexylcarboxylate; 4-cyano-3-fluorophenyl-trans-4-propyl-cyclohexylcarboxylate; trans-4-heptyl-(3,5-difluoro-4-nitrophenyl)-cyclohexane; 2,6-difluoro-1-cyano-4-[trans-4-(trans-4-propylcyclohexyl)-cyclohexyl]-benzene; trans-4-propyl-(3,4,5-trifluorobiphenyl-4'-yl)-cyclohexane; 2-(trans-4-propylcyclohexyl)-1-[trans-4-(3,5-difluoro-4-nitrophenyl)-cyclohexyl]-ethane, 3,5-difluoro-4-nitrophenyl-trans-4-pentylcyclohexylcarboxylate; trans-4-heptyl-(3-fluoro-4-cyanophenyl)-cyclohexane; 2-fluoro-1-nitro-4-[trans-4-(trans-4-propylcyclohexyl)-cyclohexyl]-benzene; trans-4-propyl-(3-fluoro-4-cyanobiphenyl-4'-yl)-cyclohexane; 2-(trans-4-propylcyclohexyl)-1-[trans-4-(3-fluoro-4-nitrophenyl)-cyclohexyl]-ethane; 3-fluoro-4-cyanophenyl-trans-4-pentylcyclohexylcarboxylate; trans-4-heptyl-(4-cyanophenyl)-cyclohexane; 4-cyanophenyl-5-pentyl-1,3-pyrimidine; 4-cyano-3-fluorophenyl-5-propyl-1,3-pyrimidine, 4-cyanophenyl-4-pentyl-1,3-dioxane and 4-cyanophenyl-4-pentyl-bicyclo[2.2.2]octane.

The present invention is not limited to the above compounds.

In accordance with a second solution, the present invention provides liquid crystal compounds of the general formula II, 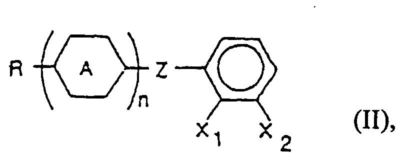 wherein are:
- X₁ and X₂: fluoro, cyano, trifluoromethyl, trifluoromethoxy, nitro or a hydrogen atom,
- R: C₁₋₁₀-alkyl or C₁₋₁₀-alkoxy, which may be substituted,
- A: a cyclohexane ring, a benzene ring, a dioxane ring, a pyrimidine ring or a bicyclo[2.2.2]-octane or -hexane ring,
- Z: a single bond, an ester bond, an ether bond, methylene or ethylene, and
- n: 1 or 2.

The liquid crystal compounds of formula II are preferably selected from trans-4-heptyl-(2-cyano-3-fluorophenyl)-cyclohexane; 2-cyano-3-fluoro-4-[trans-4-(trans-4-propylcyclohexyl)-cyclohexyl]-benzene; trans-4-propyl-(2-cyano-3-fluorobiphenyl-4'-yl)-cyclohexane; 2-(trans-4-propylcyclohexyl)-1-[trans-4-(2-cyano-3-fluorophenyl]-cyclohexyl]-ethane; 2-cyano-3-fluorophenyl-trans-4-pentylcyclohexylcarboxylate; trans-4-heptyl-(2-fluoro-3-nitrophenyl)-cyclohexane; 2-fluoro-3-cyano-4-[trans-4-(trans-4-propylcyclohexyl)-cyclohexyl]-benzene; trans-4-propyl-(2-fluoro-3-nitrobiphenyl-4'-yl)-cyclohexane; 2-(trans-4-propylcyclohexyl)-1-[trans-4-(2-fluoro-3-nitrophenyl)-cyclohexyl]-ethane; 2-fluoro-3-cyanophenyl-trans-4-pentylcyclohexylcarboxylate; 2,3-dicyanophenyl-5-pentyl-1,3-pyrimidine, 2-cyano-3-fluorophenyl-5-propyl-1,3-pyrimidine; 2,3-dicyanophenyl-4-pentyl-1,3-dioxane; and 2-cyano-3-fluorophenyl-4-pentyl-bicyclo[2.2.2]octane.

The present invention is not limited to the above compounds.

The liquid crystal compositions of the present invention comprise one or more liquid crystal compounds of formula I and/or one or more liquid crystal compounds of formula II. In these compositions, X₁, X₂ and X₃ in formulae I and II are preferably cyano, trifluoromethyl, trifluoromethoxy or nitro.

The invention further pertains to the use of the liquid crystal compounds of the general formulae I and II and to the use of the above-defined liquid crystal compositions for manufacturing or in liquid crystal display devices, particularly of the active matrix type, and preferably of the horizontal electric field type.

The active matrix type liquid crystal display devices of the present invention comprise a liquid crystal compound of formula I and/or a liquid crystal compound of formula II or a liquid crystal composition according to the above definition.

In accordance with a preferred embodiment, the active matrix type liquid crystal display devices of the present invention comprise a pair of substrates, at least one of which is transparent, a liquid crystal layer inserted between the substrates, an orientation film provided between the liquid crystal layer and at least one of the substrates on the inner side thereof, a scanning signal electrode, an image signal electrode, a pixel electrode and an active device, each provided between the liquid crystal and the orientation film or the substrate, respectively, and polarization means provided on the outer side of the substrates for changing an optical characteristic according to the orientation state of the liquid crystal; each of the electrodes being constructed so as to apply an electric field, mainly parallel to the substrates, against the liquid crystal layer, and being connected to external control means for optionally controlling the applied electric field according to the display pattern, wherein the electrode lies between at least two dielectric layers disposed above and below the electrode, and wherein the resistivity p of the liquid crystal is equal to or lower than 1 · 10¹⁴ Ω·cm and preferably higher than or equal to 1 · 10⁹ Ω·cm and lower than or equal to 1 · 10¹³ Ω·cm i.e., satisfies the following equations:${\text{ρ ≤ 10}}^{\text{14}} \text{Ω·cm,}$ preferably:${\text{1 · 10}}^{\text{9}} {\text{≤ ρ ≤ 1 · 10}}^{\text{13}} \text{Ω·cm.}$

In accordance with another preferred embodiment of the active matrix type liquid crystal display devices the ratio l/d of the gap l between the electrodes to the cell gap d is greater than or equal to 2.0, and the relation between the elasticity constant K₂ and the dielectric anisotropy Δε satisfies the following equation (1):${\text{K}}_{\text{2}} {\text{/Δε < 9.0 · 10}}^{\text{-8}} \text{[dyn]}$

The gap d between the substrates facing each other is preferably less than or equal to 6 mm, the gap l between the electrodes is preferably more than or equal to 10 mm, and the drive voltage is preferably lower than or equal to 5 V.

According to another preferred embodiment of the active matrix type liquid crystal display devices the common electrode is composed of a part of the display pixels, and the device is designed for an alternating current to be applied to the common electrode.

In a preferred active matrix type liquid crystal display devices according to the invention, the transmission axis of the polarization means is set to deviate 1 degree or more than 1 degree from the initial orientation direction of the liquid crystal to the rotation direction of the axis of the liquid crystal molecules due to an applied electric field.

This measure was found also effective to reduce the width of the drive voltage.

Liquid crystals which do not have increased resistivity, such as through cyano groups, can be used for display devices because liquid crystals with lower resistivity show a high voltage hold ratio in the horizontal electric field method. Therefore, the applicability of this kind of liquid crystals is remarkably increased.

The liquid crystal compounds having a fluoro group in the ortho position to a cyano group, represented by 4-cyano-3-fluorophenyl-trans-4-propylcyclohexylcarboxylate, are materials which do not tend to form dimers leading to loss of the dipole momentum. As such liquid crystal compounds have larger dielectric constants and lower viscosities, it is effective to apply this kind of compounds for high-speed driving operation in the horizontal electric field method.

When using liquid crystals of negative dielectric anisotropy by including liquid crystal compounds represented by the general formula II, in which cyano groups, trifluoromethyl groups, trifluoromethoxy groups or nitro groups are included as end groups, effective liquid crystals are obtained leading to a large numerical aperture. Namely, by decreasing the resistivity, the static electricity influence can be prevented, and at the same time the drive voltage can be decreased. The decrease of the resistivity is further effective for small viscosity necessary for high-speed response.

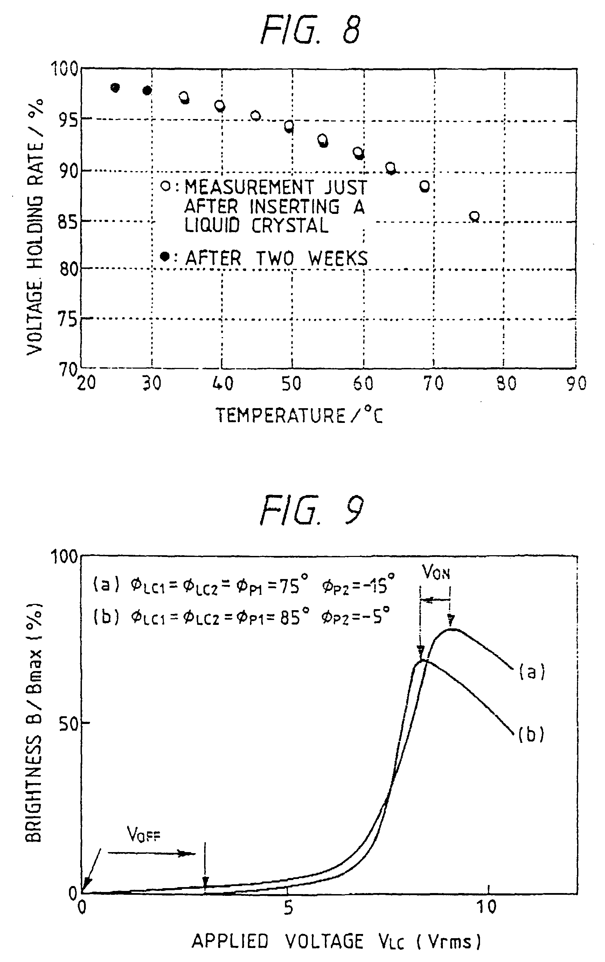

When the dielectric anisotropy of the liquid crystal is positive, the rubbing angle of the orientation film is set to be more than or equal to 1 degree and less than or equal to 20 degrees, relative to the vertical direction of the electric field, and when the dielectric anisotropy of the liquid crystal is negative, the rubbing angle is set to be more than or equal to 1 degree and less than or equal to 10 degrees, relative to the direction of the electric field. This is another important means for reducing the drive voltage. As the angle between the axis of the liquid crystal molecules and the direction of the electric field becomes close to 90 degrees, the voltage at the maximum transmission factor shifts to the low voltage side. Further, the non-select voltage can be set to the high voltage side, because the threshold voltage of the response to the electric field shifts to the high voltage side. Accordingly, it is possible to reduce the width of the drive voltage. Fig. 9 shows a typical example thereof. Therefore, it is desirable that the rubbing angle is as small as possible, as long as any domains do not occur.

In addition, it is possible to further reduce the drive voltage by applying an alternating current to the common electrode.

According to a preferred embodiment of the device of the present invention, the transmission axis of the polarizer is set to deviate 1 degree or more than 1 degree from the initial orientation direction of the liquid crystal to the rotation direction of the axis of the liquid crystal molecules due to the applied electric field.

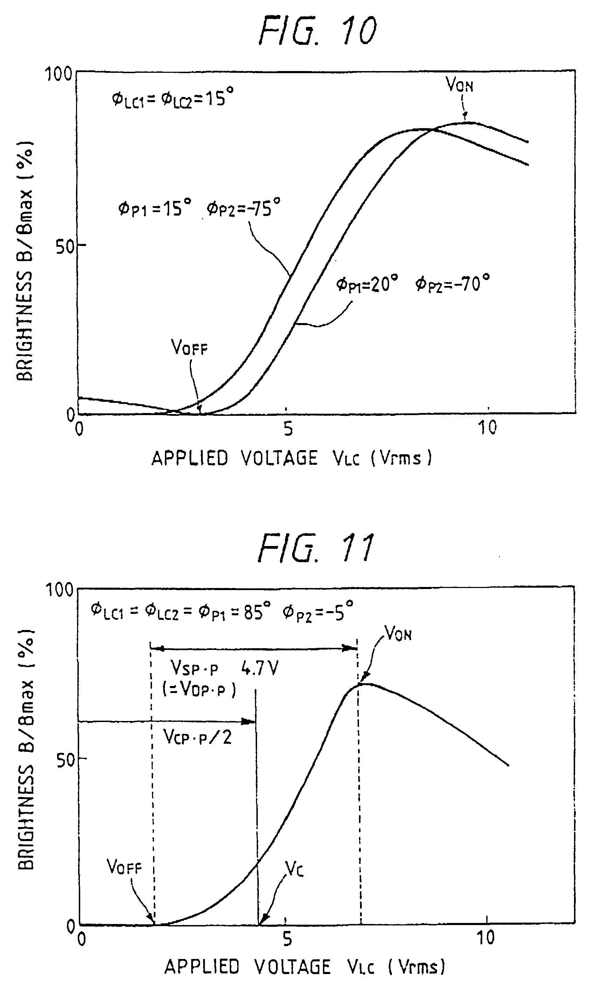

The above-mentioned preferred setting of the transmission axis of the polarizer was found also effective to reduce the width of the drive voltage as shown in Fig. 10 described below, in which the transmission axis of a polarizing plate deviates by more than 1 degree from the initial orientation direction.

### BRIEF DESCRIPTION OF THE DRAWINGS

- Figs. 1(a)-1(d): illustrate the operation of the liquid crystal using the horizontal electric field method.
- Fig. 2: is an illustrative representation of the definition of the rubbing direction and the axis direction of the polarizer.
- Figs. 3(a)-3(c): are views showing an example of the electrode configuration in the unit pixel of the liquid crystal display device.
- Fig. 4: is a view showing another example of the electrode configuration in the unit pixel of the liquid crystal display device.
- Fig. 5: is a typical example of the configuration of a color filter substrate.
- Fig. 6: is a diagrammatic view showing a TFT circuit in the liquid crystal display device according to the present invention.
- Figs. 7(a)-7(e): are examples of the waveform of alternating current applied to the common electrode.
- Fig. 8: is a graph showing the result of experiments on the voltage hold ratio in the liquid crystal display device according to the present invention.
- Fig. 9: is a graph showing the influence of the rubbing direction on the width of the drive voltage.
- Fig. 10: is a graph showing the variation of the voltage-transmittance characteristic caused by the variation of the axis direction of the polarizer.
- Figs. 11 and 12: are graphs showing voltage-transmittance characteristics.

### DETAILED DESCRIPTION OF PREFERRED EMBODIMENTS

Embodiments of devices according to the present invention will be explained in detail.

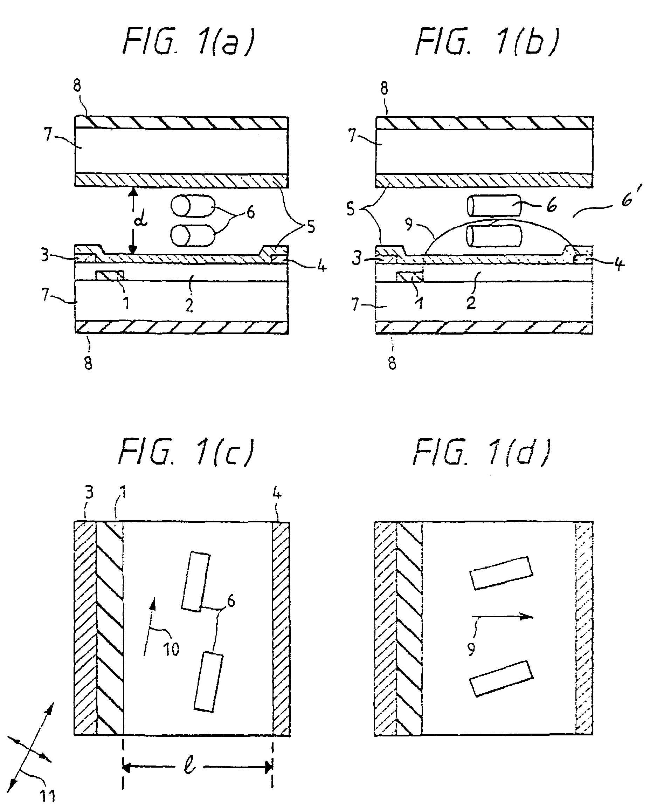

Figs. 1(a) and (b) are side cross-sectional views showing the operation of the liquid crystal in the liquid crystal panel, and Figs. 1(c) and (d) show front views thereof in accordance with the present invention. In Fig. 1, active devices are not shown. In addition, though a plurality of pixels are formed with stripe-shaped electrodes in the present invention, a partial view of only one single pixel is shown in Fig. 1. The side cross-sectional view when no voltage is applied is shown in Fig. 1(a), and the front view is shown in Fig. 1(c). The gap 1 between the electrodes is indicated in Fig. 1(c). The linear electrodes 3 and 4 are formed on the inner side of a pair of transparent substrates 7, and orientation films 5 are coated on the substrates 7 such that they are facing each other. A liquid crystal material 6 is provided between the films, the gap d being indicated in Fig. 1(a). The liquid crystal molecules 6 of linear shape are oriented so that the angle φ_{LC} between the longitudinal axis of the molecules and the longitudinal direction of the stripe-shaped electrode may be maintained to be an adequate angle such as 45° < | φ_{LC} | < 90°.

For the explanation below, the orientation direction of the liquid crystal molecules on the upper and lower interfaces is assumed to be parallel to each other, that is, ${\text{φ}}_{\text{LC1}} {\text{= φ}}_{\text{LC2}}$.

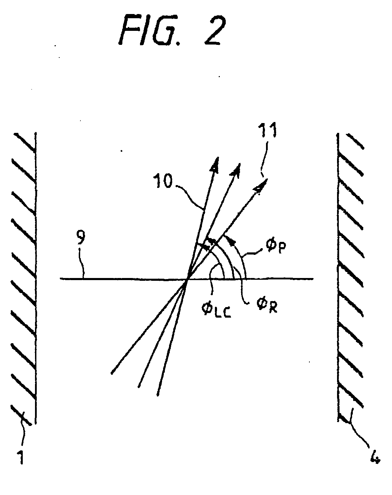

The dielectric anisotropy of the liquid crystal composite material is assumed to be positive. Next, when the electric field 9 is applied, as shown in Figs. 1(b) and 2, the longitudinal axis 10 of the liquid crystal molecules 6 is oriented in the direction of the electric field 9. By suitably arranging the polarizer 8 with its polarization axis, the optical transmission index can be modulated by applying and changing the applied electric field 9. Thus, a display operation for defining contrast is possible without transparent electrodes. Though the dielectric anisotropy of the liquid crystal composite material is assumed to be positive, it may be selected to be negative. In case of negative dielectric anisotropy, as for the initial orientation of the liquid crystal molecules, the angle φ_{LC} is maintained to be an adequate angle to the vertical direction to the longitudinal axis of the striped electrode such as O° < |φ_{LC}| <45°.

The transmission axis of the polarizer is set to deviate 1 degree or more than 1 degree from the initial orientation direction of the liquid crystal to the rotation direction of the axis of the liquid crystal molecules due to the applied electric field.

In Fig. 2, the angle φ_{P} is defined by the polarization transmission axis 11, the angle φ_{LC} is defined by the liquid crystal molecule longitudinal axis (optical axis) 10 in the vicinity of the interface, and the angle φ_{R} is defined by the condenser axis of a phase shifter plate inserted between two polarizers. The angles φ_{P} and φ_{LC} are expressed selectively in terms of φ_{P1}, φ_{P2}, φ_{LC1} and φ_{LC2} with regard to a pair of polarizers and two liquid crystal interfaces.

By providing the electrode between at least two dielectric layers disposed above and below the electrode, and by making the resistivity of the liquid crystal lower than or equal to 1 · 10¹³ Ω·cm, as described above, it is possible to increase the numerical aperture. The reason will be explained hereinafter. In the horizontal electric field mode, an opaque metal electrode is used. It is, therefore, impossible to realize numerical apertures larger than those of the prior art. The basic method for solving this problem is to enlarge the gap between the electrodes. However, a new problem may arise due to the enlargement of the gap. There occours a disturbance of orientation by static electricity, because the volume of the liquid crystal is further decreased. The provision of an auxiliary capacitance to each of the pixels leads to a deterioration of the numerical aperture. However, if the resistance of the liquid crystal is low, the disturbance of the orientation due to the static electricity is small. Therefore, these are very effective means. By these means, the domains around the spacer beads are also improved. In the conventional active matrix type liquid crystal display devices, it is required to use liquid crystals with a high resistivity of at least 1 · 10¹³ Ω·cm, preferably 1 · 10¹⁴ Ω·cm, in order to apply a sufficient voltage even during non-selected periods of time. In the horizontal electric field method, the dielectric except the liquid crystal, such as a glass or an insulation film, acts as a hold capacitance to obtain the voltage hold ratio necessary to work. By experiments, it has been found that even a liquid crystal with a resistivity of 1 · 10¹⁰ Ω·cm has a high voltage holding rate (frame frequency: 60 Hz) of more than 90 %. However, as compared to the conventional method such as the TN method, the total capacitance including the capacitance of the liquid crystal and the hold capacitance is smaller in magnitude in the horizontal electric field method, and is susceptible to be affected by the effect of static electricity. It is not the static electricity but the increase of the drive voltage which is brought up by the enlargement of the gap between the electrodes.

As for the means for reducing the drive voltage, it has been found to be effective that, as described in the preferred embodiments 1 and 2, the relation between the dielectric anisotropy Δε of the liquid crystal composite material and the elasticity constant K₂ of the twist should satisfy the equation ${\text{K}}_{\text{2}} {\text{/Δε < 9.0 · 10}}^{\text{-8}} \text{dyn}$. As the thickness of the electrode is less than that of the liquid crystal composite material layer in the ordinary horizontal electric field method, it is impossible to apply the electric field completely parallel to the interface between the liquid crystal and the orientation layer and the liquid crystal composite material layer. This insufficient horizontal electric field causes a reduction of the efficiency in the switching operation of the liquid crystal at the interface. By making the dielectric constant ε_{LC} of the liquid crystal larger than the dielectric constant ε_{AF} of the orientation layer, preferably making ε_{LC} twice as large than ε_{AF}, what can be applied to the liquid crystal is a horizontal electric field which is more parallel to the interface between the liquid crystal and the orientation layer. Based on a more intensive study in which the elasticity constant K₂ of the twist was modified to be smaller or the dielectric anisotropy of the liquid crystal was modified to be larger, when the ratio K₂/Δε is set to be 9.0 · 10⁻⁸ dyn, and more preferably when this ratio is set to be 7.0 · 10⁻⁸ dyn, a drive voltage of 5 V or less can be attained. A drive voltage of 5 V means that it is possible to achieve a display by using a 5 V signal voltage driver.

As described in embodiment 3 by including liquid crystal compounds represented by the general formula I, in which cyano groups, trifluoromethyl groups, trifluoromethoxy groups or nitro groups are included as end groups, effective liquid crystal devices may be achieved having a large numerical aperture. Namely, by decreasing the resistivity, the influence of static electricity can be prevented, and at the same time the drive voltage can be decreased. The decrease of the resistivity is further effective for small viscosity necessary for high-speed response.

### Embodiment 1

Two transparent glass substrates are used, which are of 1.1 mm in thickness, and the surface of which is polished. After forming thin film transistors on one of the substrates, the orientation film is formed thereon, which also acts as an insulation film. A polyimide is used as the orientation film in this embodiment. A rubbing-processing is performed on the polyimide film in order to orient the liquid crystal. The formation of a polyimide film and the rubbing processing are performed also on the other substrate. The individual rubbing directions of the two substrates are parallel to each other, and have an angle of 75° (${\text{φ}}_{\text{LC1}} {\text{= φ}}_{\text{LC2}} \text{= 75°}$) with respect to the direction of the applied electric field. A nematic liquid crystal composition is sandwiched between these substrates, having a dielectric anisotropy Δε of +7.3 and a refractive index anisotropy Δn of 0.074 (589 nm, 20 °C). A gap d is achieved by distributing polymer beads between the substrates, and the space of the gap is 4.0 µm. Thus, d·Δn is 0.296 µm. The panel is sandwiched with a pair of polarizers (G1220DU, made by Nitto Electric Co.), and the polarization transmission axis of one polarizer (P1) is set to φ_{P1} = 75°, and the polarization transmission axis of the other polarizer (P2) is set to intersect perpendicularly with the former polarization transmission axis, which means φ_{P2} = -15°. With this geometrical configuration, the normally-closed characteristic of the display pixel can be established, that is, the display pixel is in a dark state at a low voltage (V_{OFF}), and is in a bright state at a high voltage (V_{ON}).

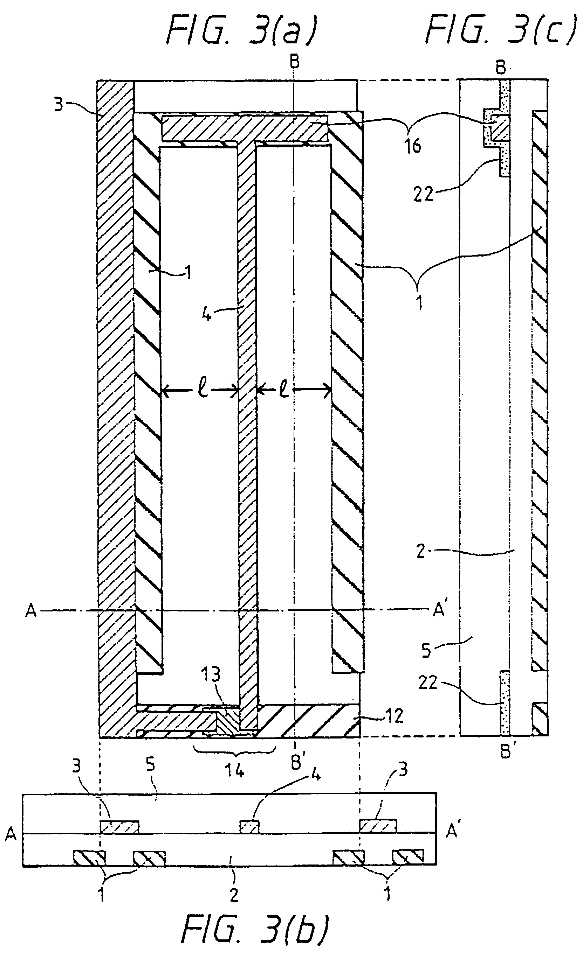

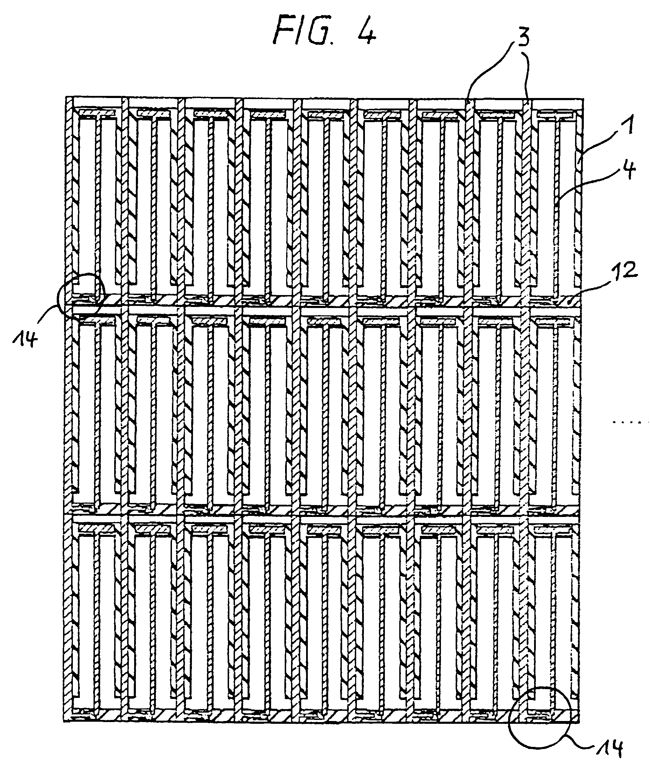

Fig. 3 shows the configurations of a thin film transistor 14 and all kinds of electrodes. Fig. 3 (a) is a front view seen from the direction perpendicular to the surface of the substrate. Figs. 3 (b) and (c) are sectional side elevations. The thin film transistor 14 representing the active device comprises a pixel electrode (source electrode) 4, a signal electrode (drain electrode) 3, a scan-fling electrode (gate electrode) 12, (cf. Fig. 4) and amorphous silicon 13. The common electrodes 1 and the scanning electrode 12, and the signal electrode 3 and the pixel electrode 4, respectively, are a part of the pattern made up by the same metal layer. A capacitor 16 is made by sandwiching a gate insulation film 2 with the pixel electrode 4 and the common electrodes 1 at an area (shown by the dotted line in Fig. 3) between two common electrodes. In Fig. 3 (a), the pixel electrode 4 is disposed between two common electrodes 1. The pitch of the pixel electrode is 69 µm in the horizontal direction, i.e., between the signal wiring electrodes, and 207 µm in the vertical direction, i.e., between the scanning wiring electrodes. The width of the electrode is made large in order to avoid wiring defects in the wiring electrode extending over a plurality of electrodes, the scanning electrode, the signal electrode 13, or the common electrode wiring portion (the portion extending in the direction (horizontal direction in Fig. 3) parallel to the scanning wiring electrode). More concretely, the width of the electrode is made 10 µm. The width of the electrode is made a little bit narrow in order to increase the numerical aperture, the pixel electrode being formed independently for every pixel and the longitudinally extending portion of the signal wiring electrode of the common electrode. More concretely, the width of the electrode is made 5 µm and 8 µm, respectively. The possibility of breaking of wire becomes higher because the width of the electrode is decreased. However, the breaking of wire ends in a partial defect, and does not lead to a line defect. In addition, in order to increase the numerical aperture as much as possible, a portion of the common electrode and a portion of the signal electrode are provided one over the other, wherein an insulation film is inserted between those electrodes, and the width of the piled portion is 1 µm. Thereby, it is not necessary to provide the black matrix 22 parallel to the signal wiring. As a result, the present invention adopts the black matrix configuration as shown in Fig. 3 (c), in which only the light in the direction of the scanning wiring electrode is blocked. As a result, a high numerical aperture of 44.0 % is obtained, the gap between the common electrode and the pixel electrode being 20 µm, the length of the opening in the longitudinal direction is 157 µm, and the number of pixels formed by 320 signal wiring electrodes and 160 wiring electrodes being 320 x 160.

The resistivity of the liquid crystal is 7.6 · 10¹² Ω·cm, and undesirable conditions of orientation due to static electricity do not occur. An active matrix type liquid crystal display device both with a broad visual field and a large numerical aperture, wherein inversion of gradation does not occur over more than 60 degrees in the up and down directions, and more than 60 degrees in the right and left directions.

### Embodiment 2

The structure of embodiment 2 is identical with that of embodiment 1, except for the following features:

The material used for the liquid crystal is prepared by adding 5 weight % of 4-cyano-3-fluorophenyl-trans-4-propylcyclohexylcarboxylate to the liquid crystal of embodiment 1, where the weight % values indicated hereinafter are based on the total weight.

The resistivity of the liquid crystal is 7.6 · 10¹² Ω·cm, and undesirable conditions of orientation due to static electricity do not occur. The active matrix type liquid crystal display device provides both a broad visual field and a large numerical aperture, wherein inversion of gradation does not occur over more than 60 degrees in the up and down directions, and more than 60 degrees in the right and left directions.

### Embodiment 3

The structure of embodiment 3 is identical with that of embodiment 1 except for the following features:

The material used for the liquid crystal is prepared by adding 7 weight % of 3,4-dicyanophenyl-trans-4-pentylcyclocarboxylate to the liquid crystal composition of embodiment 1.

The resistivity of the liquid crystal is 3.3 · 10¹¹ Ω·cm, and undesirable conditions of orientation due to static electricity do not occur. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 4

The structure of the device of embodiment 4 is identical with that of embodiment 1 except for the following features:

The material used for the liquid crystal is prepared by adding 10 weight % of 4-trifluoromethoxy-3,5-difluorophenyl-trans-4-pentylcyclohexylcarboxylate to a liquid crystal comprising 4-cyano-3-fluorophenyl-trans-4-ethylphenylcarboxylate, 1-[4-(3,4,5-trifluorophenyl)-cyclohexyl]-2-(4-methylcyclohexyl)-ethane, 4-cyano-3-fluorophenyl-4-(4-propylcyclohexyl)-phenylcarboxylate and so on as representative compounds.

The resistivity of the liquid crystal is 2.4 · 10¹⁰ Ω·cm, and undesirable conditions of orientation due to static electricity do not occur. The ratio K₂/Δε of the elasticity constant K₂ to the dielectric anisotropy Δε is made to be 8.5 · 10⁻⁸ dyn. Further, the drive voltage can be established to be 5 V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 5

The structure of embodiment 5 is identical to that of embodiment 1 except for the following features:

The material used for the liquid crystal is prepared by adding 20 weight % of 4-cyano-3,5-difluorophenyl-trans-4-pentylcyclohexylcarboxylate to a liquid crystal comprising 4-cyano-3-fluorophenyl-trans-4-ethylphenylcarboxylate, 1-[4-(3,4,5-trifluorophenyl)-cyclohexyl]-2-(4-methylcyclohexyl)-ethane, 4-cyano-3-trifluoromethyl-5-fluorophenyl-4-(4-propylcyclohexyl)-phenylcarboxylate and so on as representative compounds.

The resistivity of the liquid crystal is 9.3 · 10⁹ Ω·cm, and undesirable conditions of orientation due to static electricity do not occur. The ratio K₂/Δε of the elasticity constant K₂ to the dielectric anisotropy Δε is made to be 5.4· 10⁻⁸ dyn. Further the drive voltage can be established to be 5 V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 6

The structure of embodiment 6 is identical with that of embodiment 1 except for the following features:

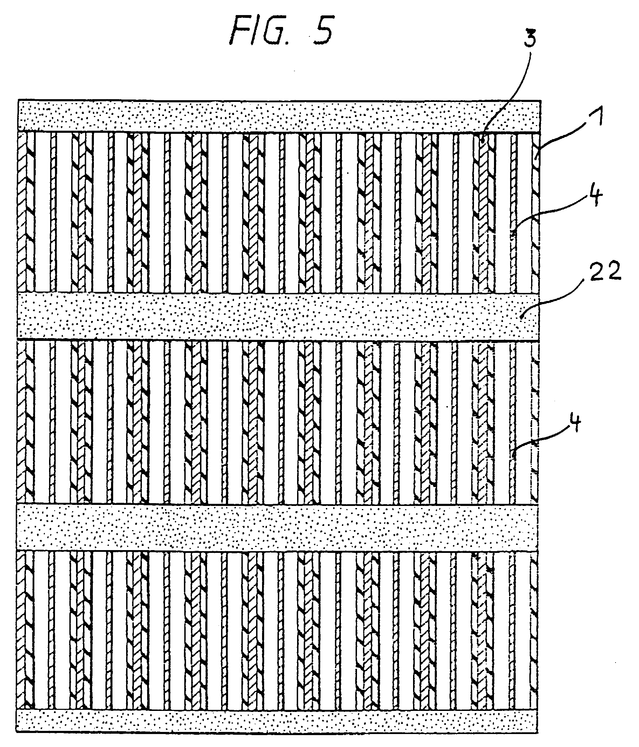

Fig. 4 shows the configurations of thin film transistors 14 and all kinds of electrodes in more detail; it shows a front view seen from the direction perpendicular to the surface of the substrate of Fig. 4 and sectional side elevations each taken along the lines A-A' and B-B', respectively. The thin film transistor 14 comprises a pixel electrode (source electrode) 4, a signal electrode (drain electrode) 3, a scanning electrode (gate electrode) 12, and amorphous silicon 13 (cf. Fig. 3 (a)). The common electrodes 1 and the scanning electrode 12, and the signal electrode 3 and the pixel electrode 4, respectively, are a part of the pattern made up by the same metal layer. A capacitor 16 is made by sandwiching a gate insulation film 2 with the pixel electrode 4 and the common electrodes 1 at an area (shown by the dotted line in Fig. 3) between two common electrodes. In the front view, the pixel electrode is disposed among three common electrodes 1. The pitch of the pixel electrode is 100 µm in the horizontal direction, i.e., between the signal wiring electrodes, and 300 µm in the vertical direction, i.e., between the scanning wiring electrodes. The width of the electrode is made large in order to avoid wiring defects in the wiring electrode extending over a plurality of electrodes, the scanning electrode 12, the signal electrode 13, or the common electrode wiring portion (the portion extending in the horizontal direction in Fig. 3 parallel to the scanning wiring electrode). More concretely, the width of the electrodes is made 10 µm, 8 µm and 8 µm, respectively. The width of the pixel electrode is formed independently for every pixel, and the longitudinally extending portion of the signal wiring electrode of the common electrode is made a little bit narrow. More concretely, the width thereof is taken to be 5 µm and 6 µm, respectively. The possibility of breaking of wire becomes higher, because the width of the electrode is decreased. However, the breaking of wire ends in a partial defect, and does not end in a line defect. In addition, the common electrode and the signal electrode are spaced by using the insulation film, in which the spacing is 2 µm in thickness. The black matrix configuration and a color filter are provided on the opposite substrate side as shown in Fig. 5. The gap between the common electrode and the pixel electrode is 20 µm, and the length in the longitudinal direction of the opening is 157 µm. As a result, the number of pixels formed by 640 signal wiring electrodes and 480 wiring electrodes is 320 x 160.

The nematic liquid crystal composition is sandwiched between the substrates, and includes 10 weight % of 3-cyano-4-trifluoro-methoxy-5-fluorophenyl-trans-4-ethylcyclohexylcarboxylate; the dielectric anisotropy Δε is +8.9, and the refractive index anisotropy Δn is 0.08 (589 nm, 20 °C).

The resistivity of the liquid crystal is 8.1· 10¹² Ω·cm, and undesirable conditions of orientation due do static electricity do not occur. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 7

The structure of embodiment 7 is identical with that of embodiment 6 except for the following features:

The material used for the liquid crystal is prepared by adding 10 weight % of 4-cyano-3,5-difluorophenyl-trans-4-propylcyclohexylcarboxylate to the liquid crystal of embodiment 6.

The resistivity of the liquid crystal is 2.2 · 10¹⁰ Ω·cm, and undesirable conditions of orientation due to static electricity do not occur. The ratio K₂/Δε of the elasticity constant K₂ to the dielectric anisotropy Δε is made to be 4.6 · 10⁻⁵ dyn. Further, the drive voltage can be established to be 5 V or less. As a result, an active matrix type liquid crystal display device provides both a broad visual field and a large numerical aperture, wherein inversion of gradation does not occur over more than 60 degrees in the up and down directions, and more than 60 degrees in the right and left directions.

### Embodiment 8

The structure of embodiment 8 is identical with that of embodiment 6 except for the following features:

The material used for the liquid crystal is prepared by adding 20 weight % of 4-cyano-3,5-difluorophenyl-trans-4-propylcyclohexylcarboxylate to the liquid crystal composition of embodiment 6.

The resistivity of the liquid crystal is 6.2 · 10¹⁰ Ω·cm, and undesirable conditions of orientation due to static electricity do not occur. The ratio K₂/Δε of the elasticity constant K₂ to the dielectric anisotropy Δε is made to be 2.9· 10⁻⁸ dyn. Further, the drive voltage can be established to be 5 V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 9

The structure of embodiment 9 is identical with that of embodiment 6 except for the following features:

The material used for the liquid crystal is prepared by adding 10 weight % of 3-cyano-4-trifluoromethoxy-5-fluorophenyl-trans-4-ethylcyclohexylcarboxylate to the liquid crystal composition of embodiment 6.

The resistivity of the liquid crystal is 8.8 · 10⁹ Ω·cm, and undesirable conditions of orientation due to static electricity do not occur. The ratio K₂/Δε of the elasticity constant K₂ to the dielectric anisotropy Δε is made to be 2.3 · 10⁻⁸ dyn. Further, the drive voltage can be established to be 5 V or less. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 10

The structure of embodiment 10 is identical with that of embodiment 1 except for the following features:

The individual rubbing directions of the orientation films of the pair of substrates are parallel to each other, and form an angle of 15° (${\text{φ}}_{\text{LC1}} {\text{= φ}}_{\text{LC2}} \text{= 15°}$) with the direction in which the applied electric field extends. A nematic liquid crystal composition is sandwiched between these substrates, in which the dielectric constant anisotropy Δε is -3.3, and the refractive index anisotropy Δn is 0.074 (589 nm, 20 °C). The material used here for the liquid crystal is prepared by adding 4 weight % of 3-cyano-2-fluorophenyl-trans-4-pentylcyclohexylcarboxylate to the nematic liquid crystal composition.

The resistivity of the liquid crystal is 8.6· 10¹¹ Ω·cm, and undesirable conditions of orientation due to static electricity do not occur. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 11

The structure of embodiment 11 is identical to that of embodiment 6 except for the following features:

10 weight % of 2-(trans-4-propylcyclohexyl)-1-[trans-4-(2,3-dicyanophenyl)-cyclohexyl]-ethane are added to a nematic liquid crystal composite, in which the dielectric constant anisotropy Δε is -3.3 and the refractive index anisotropy Δn is 0.074 (589 nm, 20 °C).

The resistivity of the liquid crystal is 7.2 · 10¹⁰ Ω·cm, and undesirable conditions of orientation due to static electricity do not occur. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 12

The structure of embodiment 12 is identical with that of embodiment 6 except for the following features:

The individual rubbing directions of the orientation films of the two substrates are parallel to each other, and form an angle of 85° (${\text{φ}}_{\text{LC1}} {\text{= φ}}_{\text{LC2}} \text{= 85°}$) with the direction in which the applied electric field extends. The polarization transmission axis of one polarizer is set to φ_{P1} = 85°, and the polarization transmission axis of the other polarizer is set to intersect perpendicularly with the former polarization transmission axis, which means φ_{P2} = -5°. With this geometrical configuration, a normally-closed characteristic of the display pixels can be established, that is, the display pixels are in a dark state at a low voltage (V_{OFF}), and in a bright state at a high voltage (V_{ON}).

The voltage-transmittance characteristic of this active matrix type liquid crystal device is shown in Fig. 11. V_{OFF} can be set to 2.1 V and V_{ON} can be set to 6.8 V. Therefore, the width of the drive voltage can be set to 4.7 V. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 13

The structure of embodiment 13 is identical with that of embodiment 11 except for the following features:

The individual rubbing directions of the orientation films of the two substrates are parallel to each other, and form an angle of 5° (${\text{φ}}_{\text{LC1}} {\text{= φ}}_{\text{LC2}} \text{= 5°}$) with the direction in which the applied electric field extends. The polarization transmission axis of one polarizer is set to φ_{P1} = 5°, and the polarization transmission axis of the other polarizer is set to intersect perpendicularly with the former polarization transmission axis, which means φ_{P2} = -85°. With this geometrical configuration, the normally-closed characteristic of the display pixels can be established, that is, the display pixels are in a dark state at a low voltage (V_{OFF}), and in a bright state at a high voltage (V_{ON}).

The voltage-transmittance characteristic of this active matrix type liquid crystal device corresponds to that of Fig. 11, in which V_{OFF} can be set to 4.0 V and V_{ON} can be set to 8.8 V. Therefore, the width of the drive voltage can be set to 4.8 V. As a result, the active matrix type liquid crystal display device provides both a broad visual field and a large numerical aperture, wherein inversion of gradation does not occur over more than 60 degrees in the up and down directions, and more than 60 degrees in the right and left directions.

### Embodiment 14

The structure of embodiment 14 is identical with that of embodiment 12 except for the following features:

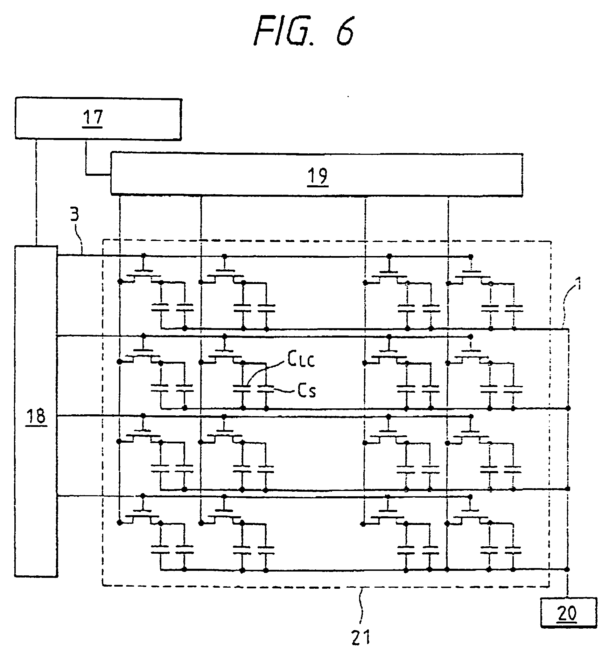

The common electrode is made as shown in Fig. 6, in order to apply an alternating current thereto. Each scanning electrode 12 and each signal electrode 3 are connected to a scanning electrode drive circuit 18 and a signal electrode drive circuit 19, respectively. Further, the common electrode 1 is connected to a common electrode drive circuit 20. A signal waveform comprising an information is applied to the signal electrode 3. A scanning waveform in synchronism with the signal waveform is applied to the scanning electrode 12. The information signal is transferred from the signal electrode 3 through a thin film transistor 14 to the pixel electrode 4, whereby the voltage produced between the pixel electrode and the common electrode 1 is applied to a portion of the liquid crystal. In the present invention, a voltage waveform is also applied to the common electrode 1. Therefore, a voltage in which that of the common electrode is added is applied to the portion of the liquid crystal.

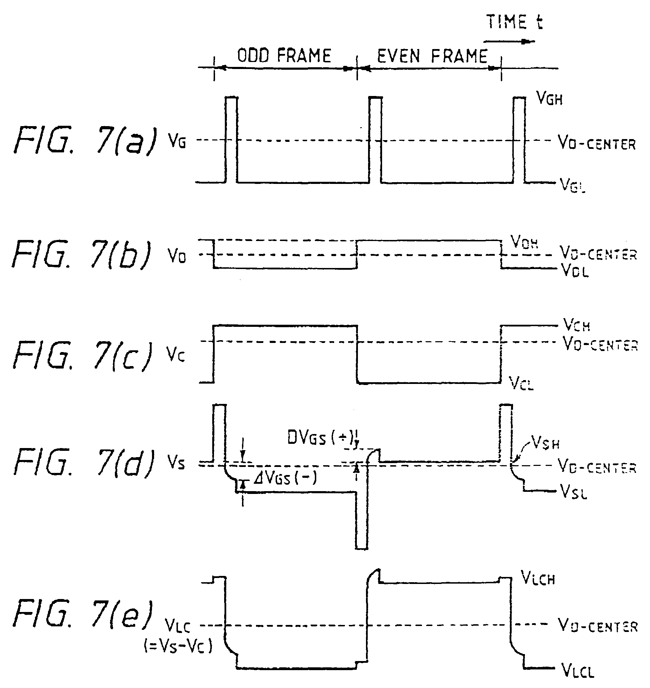

Fig. 7 shows those voltage waveforms applied to each of the wiring electrodes, where the amplitudes of the voltage waveforms in Fig. 7 are set as follows:$\begin{matrix}\begin{matrix}{\text{V}}_{\text{D-CENTER}} {\text{= 14.0 V, V}}_{\text{GH}} {\text{= 28.0 V, V}}_{\text{GL}} \text{= 0 V,} \\ {\text{V}}_{\text{DH}} {\text{= 16.4 V, V}}_{\text{DL}} {\text{= 11,4 V, V}}_{\text{CH}} {\text{= 15.1 V, V}}_{\text{CL}} \text{= 9.1 V.}\end{matrix}\end{matrix}$

V_{ON} and V_{OFF} according to Fig. 11 are 2.1 V and 6.8 V, respectively. As a result, a higher contrast ratio is obtained, namely 150. In Fig. 11, V_{DP-P}, V_{SP-P} and V_{CP-P} represent peak-to-peak values of the signal voltage, the source voltage, and the common voltage, respectively.

In the present embodiment, the amplitude of the drive voltage waveform ${\text{V}}_{\text{DP-}} {}_{\text{P}} {\text{(= V}}_{\text{DH}} {\text{- V}}_{\text{DL}} \text{)}$ is of a very low value, 4.7 V, which is supplied to the signal wiring electrode. Accordingly, a relatively cheap driver can be used, and it becomes possible to reduce the production cost.

### Embodiment 15

The structure of embodiment 15 is identical with that of embodiment 13 except for the following features:

In the same way as in Embodiment 14, the alternative current is applied to the common electrode, and the display device is driven.

Accordingly, a relatively cheap driver can be used, and it becomes possible to reduce the production cost.

### Embodiment 16

The structure of embodiment 16 is identical with that of embodiment 14 except for the following features:

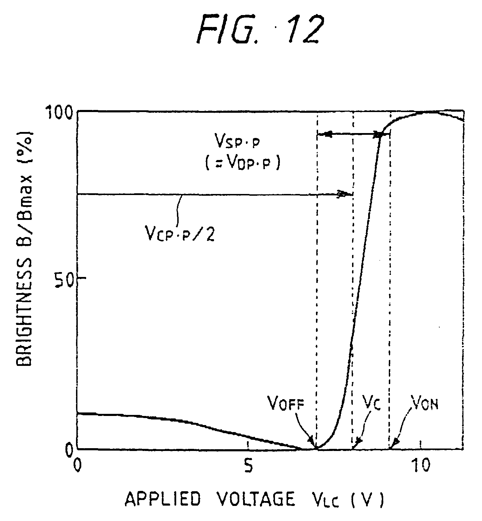

The transmission axis of the polarizer is set so as to form an angle of 10° with respect to the rubbing direction, namely, φ_{P1} = 75° and φ_{P2} = -15°. Fig. 12 shows the relationship between the voltage-transmittance characteristic and the drive waveform obtained with the above structure. In Fig. 12, V_{DP-P}, V_{SP-P}, and V_{CP-P} represent peak-to-peak values of the signal voltage, the source voltage, and the common voltage.

The common electrode is made as in Embodiment 9, in order to apply an alternating current thereto. Each scanning electrode 12 and each signal electrode 3 are connected to a scanning electrode drive circuit 18 and a signal electrode drive circuit 19, respectively. Further, the common electrode 1 is connected to a common electrode drive circuit 20 (see Fig. 6). A signal waveform comprising an information is applied to the signal electrode 3. A scanning waveform in synchronism with the signal waveform is applied to the scanning electrode 12. The information signal is transferred from the signal electrode 3 through a thin film transistor 14 to the pixel electrode 4, whereby the voltage produced between the pixel electrode and the common electrode 1 is applied to a portion of the liquid crystal. In the present invention, a voltage waveform is also applied to the common electrode 1. Therefore, a voltage in which that of the common electrode is added is applied to the portion of the liquid crystal.

Fig. 7 shows those voltage waveforms applied to each of the wiring electrodes, where the amplitudes of the voltage waveforms in Fig. 7 are set as follows:$\begin{matrix}\begin{matrix}{\text{V}}_{\text{D-CENTER}} {\text{= 14.0 V, V}}_{\text{GH}} {\text{= 28.0 V, V}}_{\text{GL}} \text{= 0 V,} \\ {\text{V}}_{\text{DH}} {\text{= 15.1 V, V}}_{\text{DL}} {\text{= 12.9 V, V}}_{\text{CH}} {\text{= 20.4 V, V}}_{\text{CL}} \text{= 4.39 V.}\end{matrix}\end{matrix}$

As a result, the plunge voltage ΔV_{GS}(+1), ΔV_{GS}(-1) produced by the parasitic capacitance between the gate electrode and the source electrode, the voltage V_{S} applied over the pixel electrode and the voltage V_{LC} applied over the liquid crystal are shown in the following table. The unit of voltage is hereinafter taken as a volt.

| DISPLAY STATES | ΔV_{GS}(+) | ΔV_{GS}(-) | V_{SH} | V_{SL} | V_{LCH} | V_{LCL} | Vᵣₘₛ |
|---|---|---|---|---|---|---|---|
| BRIGHTNESS | +1.76 | -1.64 | +11.14 | -13.46 | +9.24 | -9.07 | 9.16 |
| DARKNESS | +1.47 | -1.57 | +13.63 | -11.33 | +6.75 | -6.94 | 6.85 |

V_{ON} and V_{OFF} in Fig. 12 are 9.16 V and 6.85 V, respectively. As a result, a sufficiently high contrast ratio of 100 is obtained.

In the present embodiment, the amplitude of the drive voltage waveform ${\text{V}}_{\text{DP-P}} {\text{(= V}}_{\text{DH}} {\text{- V}}_{\text{DL}} \text{)}$ has a very low value of 2.2 V, which is supplied to the signal wiring electrode.

### Embodiment 17

The structure of embodiment 17 is identical with that of embodiment 15 except for the following features:

The transmission axis of the polarizer is set so as to form an angle of 10° with respect to the rubbing direction, namely, φ_{P1} = 15° and φ_{P2} = -75°. As a result, V_{ON} and V_{OFF} are 17.4 V and 14.2 V, respectively. As a result, a sufficiently high contrast ratio of 100 is obtained.

In the present embodiment, the amplitude of the drive voltage waveform ${\text{V}}_{\text{DP-P}} {\text{(= V}}_{\text{DH}} {\text{- V}}_{\text{DL}} \text{)}$ has a very low value of 3.2 V, which is supplied to the signal wiring electrode.

While in the above-described embodiments of this invention specific liquid crystal compositions and compounds are used, it will easily be understood that other liquid crystal compositions and compounds can be used. The structure of the pixels is also not limited to that of the above-described embodiments according to the present invention.

Fig. 8 shows the results of experiments on the voltage hold ratio in the liquid crystal display device of the present invention. Fig. 9 shows the influence of the rubbing direction on the width of the driving voltage. The variation of the voltage-transmittance characteristic caused by the variation of the axis direction of the polarizer is shown in Fig. 10.

## Claims

1. Liquid crystal compounds of the general formula I, 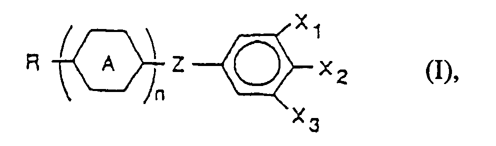 wherein are:
X₁, X₂ and X₃ fluoro, cyano, trifluoromethyl, trifluoromethoxy, nitro or a hydrogen atom,
R C₁₋₁₀-alkyl or C₁₋₁₀-alkoxy, which may be substituted,
A a cyclohexane ring, a benzene ring, a dioxane ring, a pyrimidine ring or a bicyclo[2.2.2]-octane or -hexane ring,
Z a single bond, an ester bond, an ether bond, methylene or ethylene,
and
n 1 or 2.

2. Liquid crystal compounds of formula 1 according to claim 1, selected from
1,2-dicyano-4-[trans-4-(trans-4-propylcyclohexyl)-cyclohexyl]-benzene; trans-4-propyl-(3,4-dicyanobiphenyl-4'-yl)-cyclohexane; 2-(trans-4-propylcyclohexyl)-1-[trans-4-(3,4-dicyanophenyl)-cyclohexyl]-ethane; 3,4-dicyanophenyl-trans-4-pentylcyclohexylcarboxylate; 4-cyano-3-fluorophenyl-trans-4-propylcyclohexylcarboxylate; trans-4-heptyl-(3,5-difluoro-4-nitrophenyl)-cyclohexane; 2,6-difluoro-1-cyano-4-[trans-4-(trans-4-propylcyclohexyl)-cyclohexyl]-benzene; trans-4-propyl-(3,4,5-trifluorobiphenyl-4'-yl)-cyclohexane; 2-(trans-4-propylcyclohexyl)-1-[trans-4-(3,5-difluoro-4-nitrophenyl)-cyclohexyl]-ethane, 3,5-difluoro-4-nitrophenyl-trans-4-pentylcyclohexylcarboxylate; trans-4-heptyl-(3-fluoro-4-cyanophenyl)-cyclohexane; 2-fluoro-1-nitro-4-[trans-4-(trans-4-propylcyclohexyl)-cyclohexyl]-benzene; trans-4-propyl-(3-fluoro-4-cyanobiphenyl-4'-yl)-cyclohexane; 2-(trans-4-propylcyclohexyl)-1-[trans-4-(3-fluoro-4-nitrophenyl)-cyclohexyl]-ethane; 3-fluoro-4-cyanophenyl-trans-4-pentylcyclohexylcarboxylate; trans-4-heptyl-(4-cyanophenyl)-cyclohexane; 4-cyanophenyl-5-pentyl-1,3-pyrimidine; 4-cyano-3-fluorophenyl-5-propyl-1,3-pyrimidine,4-cyanophenyl-4-pentyl-1,3-dioxane; 4-cyanophenyl-4-pentyl-bicyclo[2.2.2]octane.

3. Liquid crystal compounds of the general formula II, 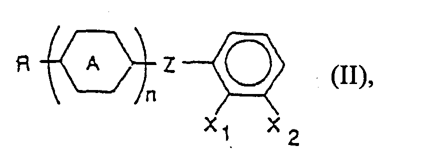 wherein are:
X₁ and X₂ fluoro, cyano, trifluoromethyl, trifluoromethoxy, nitro or a hydrogen atom,
R C₁₋₁₀-alkyl or C₁₋₁₀-alkoxy, which may be substituted,
A a cyclohexane ring, a benzene ring, a dioxane ring, a pyrimidine ring or a bicyclo[2.2.2]-octane or -hexane ring,
Z a single bond, an ester bond, an ether bond, methylene or ethylene,
and
n 1 or 2.

4. Liquid crystal compounds of formula II according to claim 3, selected from
trans-4-heptyl-(2-cyano-3-fluorophenyl)-cyclohexane; 2-cyano-3-fluoro-4-[trans-4-(trans-4-propylcyclohexyl)-cyclohexyl]-benzene; trans-4-propyl-(2-cyano-3-fluorobiphenyl-4'-yl)-cyclohexane; 2-(trans-4-propylcyclohexyl)-1-[trans-4-(2-cyano-3-fluorophenyl)-cyclohexyl]-ethane; 2-cyano-3-fluorophenyl-trans-4-pentylcyclohexylcarboxylate; trans-4-heptyl-(2-fluoro-3-nitrophenyl)-cyclohexane; 2-fluoro-3-cyano-4-[trans-4-(trans-4-propylcyclohexyl)-cyclohexyl]-benzene; trans-4-propyl-(2-fluoro-3-nitrobiphenyl-4'-yl)-cyclohexane, 2-(trans-4-propylcyclohexyl)-1-[trans-4-(2-fluoro-3-nitrophenyl)-cyclohexyl]-ethane; 2-fluoro-3-cyanophenyl-trans-4-pentylcyclohexylcarboxylate; 2,3-dicyanophenyl-5-pentyl-1,3-pyrimidine, 2-cyano-3-fluorophenyl-5-propyl-1,3-pyrimidine; 2,3-dicyanophenyl-4-pentyl-1,3-dioxane; 2-cyano-3-fluorophenyl-4-pentyl-bicyclo[2.2.2]octane.

5. Liquid crystal compositions, comprising one or more liquid crystal compounds of formula I according to claim 1 or 2 and/or one or more liquid crystal compounds of formula II according to claim 3 or 4.

6. Use of the liquid crystal compounds of the general formulae I and II according to claims 1 to 4 or use of the liquid crystal compositions according to claim 5 for manufacturing or in liquid crystal display devices, particularly of the active matrix type, and preferably of the horizontal electric field type.

7. Active matrix type liquid crystal display device, comprising a liquid crystal compound of formula I according to claim 1 or 2 and/or a liquid crystal compound of formula II according to claim 3 or 4, or a liquid crystal composition according to claim 5.

8. Active matrix type liquid crystal display device (21) according to claim 7, comprising a pair of substrates (7), at least one of which is transparent, a liquid crystal layer (6') inserted between the substrates (7), an orientation film (5) provided between the liquid crystal layer (6') and at least one substrate (7) on the inner side thereof, a scanning signal electrode (3), an image signal electrode, a pixel electrode (4) and an active device (14), and polarization means (8) provided on the outer side of the substrates (7) for changing an optical characteristic according to the orientation state of the liquid crystal; each of said electrodes being constructed so as to apply an electric field, mainly parallel to the substrates (7), against the liquid crystal layer (6'), and being connected to external control means (17, 18, 19, 20) for optionally controlling the applied electric field according to the display pattern,
wherein the electrode lies between at least two dielectric layers disposed above and below the electrode, and wherein the resistivity ρ of the liquid crystal is equal to or lower than 1·10¹⁴ Ω·cm and preferably higher than or equal to 1·10⁹ Ω·cm and lower than or equal to 1·10¹³ Ω·cm.

9. Active matrix type liquid crystal display device (21) according to claim 8, wherein the ratio l/d of the gap l between the electrodes to the cell gap d is greater than or equal to 2.0, and the relation between the elasticity constant K₂ and the dielectric anisotropy δε satisfies the following equation (1):${\text{K}}_{\text{2}} {\text{/Δε < 9.0·10}}^{\text{-8}} \text{[dyn]}$

10. Active matrix type liquid crystal display device according to claim 9, wherein the gap d between the substrates facing each other is less than or equal to 6 mm, the gap 1 between the electrodes is more than or equal to 10 mm, and the drive voltage is lower than or equal to 5 V.

11. Active matrix type liquid crystal display device according to one or more of claims 8 to 10, wherein, when the dielectric anisotropy of the liquid crystal is positive, the rubbing angle of the orientation film is set to be more than or equal to 1 degree and less than or equal to 20 degrees relative to the vertical direction of the electric field, and when the dielectric anisotropy of the liquid crystal is negative, the rubbing angle is set to be more than or equal to 1 degree and less than or equal to 10 degrees relative to the direction of the electric field.

12. Active matrix type liquid crystal display device according to one or more of claims 8 to 11, wherein the common electrode (1) is composed of a part of the display pixels, and the device is designed for an alternating current to be applied to the common electrode (1).

13. Active matrix type liquid crystal display device according to one or more of claims 8 to 12, wherein the transmission axis of the polarization means (8) is set to deviate 1 degree or more than 1 degree from the initial orientation direction of the liquid crystal to the rotation direction of the axis (10) of the liquid crystal molecules due to an applied electric field (9).
